## Europäisches Patentamt
## European Patent Office
## Office européen des brevets

(19)

(11) Publication number: **0 181 407**

A1

## EUROPEAN PATENT APPLICATION

published in accordance with Art. 158(3) EPC

(12)

(21) Application number: 85902160.2

(22) Date of filing: 09.05.85

Data of the international application taken as a basis:

(86) International application number:
PCT/JP85/00257

(87) International publication number:
WO85/05196 (21.11.85 85/25)

(51) Int. Cl.⁴: **G 05 B 19/18**

(30) Priority: 09.05.84 JP 92676/84

(43) Date of publication of application:
21.05.86 Bulletin 86/21

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KISHI, Hajimu
Hino Hirayamadai Jutaku 1104 6-7-8, Asahigaoka
Hino-shi Tokyo 191(JP)

(72) Inventor: TANAKA, Kunio
5-8-13, Tamakawa-cho
Akishima-shi Tokyo 196(JP)

(74) Representative: Billington, Lawrence Emlyn et al,
HASELTINE LAKE & CO Hazlitt House 28 Southampton
Buildings Chancery Lane
London WC2A 1AT(GB)

(54) FILE CONTROL METHOD.

(57) A file control method for a system which includes an NC device wherein data that represent sections of file are stored in the memory together with the file, and a memory order that indicates the order of memory is input to the memory, in order to read out a predetermined file from the memory. According to this method, a disc controller (23) and a disc memory (24) are connected to NC devices (21,22), common designations (NCA, NCB) are put to all files produced from the NC devices, relations between said designations and areas (24c, 24d) for storing files produced from the NC devices are stored in advance in a predetermined area (24b) of said disc memory, said area is retrieved using said designations when the files are to be stored, and the data that indicate sections of files produced from the NC devices are also stored successively in said memory area. When a file memory order n is input from the NC device, the memory area is retrieved using said designations, to count the sections in order from the head of said memory area thereby to retrieve an n-th file. The n-th file is then input to the NC devices.

Fig. 1

0181407

## DESCRIPTION

## FILE CONTROL METHOD

### Technical Field

This invention relates to a file control method and, more particularly, to a file control method in which, even if an NC unit capable of storing a file in a memory or of reading a file out of the memory solely on the basis of a prescribed input/output interface (e.g., an input/output interface for a bubble memory) has a large-capacity disc unit which does not rely upon the input/output interface connected thereto, the NC unit will have the ability to store a file in the disc unit or to read a file out of the disc unit based on the input/output interface.

### Background Art

A non-volatile memory such as a bubble memory for the purpose of storing a plurality of NC programs is connected to an NC unit and a prescribed NC program is stored in the non-volatile memory. When numerically controlled machining is performed, the prescribed NC program is read out of the non-volatile memory and numerical control processing is executed based this NC program.

If a bubble memory is connected to the NC unit as the non-volatile memory, NC programs (one NC program is referred to as one file) are stored in the bubble memory and a desired NC program is read out of the bubble memory in a manner which will now be set forth.

When a file write instruction and NC program data enter from an NC unit 11 shown in Fig. 4, a bubble memory controller 12 reads stored data sequentially from the beginning of the bubble memory 13, searches for a control byte (inserted after the file stored last) indicative of the end of data and retrieves a vacant area. Next, the controller inserts a control byte, indicative of the beginning of a file, at the head of the abovementioned NC program data, successively stores the files starting at the storage location of the control byte indicating the end of data (which control byte is erased), inserts at the end of the files a control byte indicative of file end as well as a control byte indicative of the end of data, stores the foregoing and then ends the processing for storing the NC programs (files) in the bubble memory 13.

Fig. 5 is a view for describing the configuration of files stored in the bubble memory 13. A number of files $F_i$ (i=1, 2, ... n) are stored in the bubble memory, and a data end block DEB is written into the bubble memory after the last file $F_n$. Each file is composed of a number of blocks, each block is composed of $\ell$ bytes, and a single-byte control byte CB is inserted at the head of the block. The control byte CB has eight bits $b_1$ - $b_8$. In one file, "1" is stored in the control byte (eighth bit $b_8$) of the head block BH, "1" is stored in the control byte (fifth bit $b_5$) of an end block BE, and "1" is stored in the control byte

(seventh bit $b_7$) of an intermediate block BI. Further, "1" is stored in the control byte CB (first bit $b_1$) of the data end block BE. Thus, "1" is written in the eighth bit $b_8$ of the control byte of a block if the block is at the head of a file, in the fifth bit $b_5$ of the control byte if the block is the last one in the file, in the seventh bit $b_7$ of the control byte if the block is an intermediate block, and in the first bit $b_1$ if the block is a data end block. The foregoing is thus stored in the bubble memory.

When a file read instruction and a file number n enter from the NC unit 11, the bubble memory controller 12 reads the stored data sequentially from the beginning of the bubble memory 13, counts up each time a control byte indicating the beginning of a file is sensed and, when the value of the count reaches n, delivers all the following stored data to the NC unit until the control byte indicating the end of the file is detected.

A recent trend is to use a disc unit in place of the bubble memory as the memory of the NC unit. The reason is that the storage capacity of a disc unit is much greater than that of a bubble memory and, moreover, disc units are readily procured because of their low cost.

The input/output interface between the disc unit and NC unit differs from that between the bubble memory and NC unit. Specifically, in order to store an NC program (file) from the NC unit in the disc unit, it is necessary to enter the file name in addition to the NC program data. In order to read a predetermined NC program (file) out of the disc unit, the NC unit must supply the disc unit with the file name, not a file number. Consequently, the NC unit to which a disc unit is to be connected is so constructed as to be able to effect a data transfer with the disc unit based on the input/output interface of the disc unit.

However, if it is desired to connect a disc unit to a conventional NC unit which was not designed for the connection thereto, then the disc unit cannot be added to the NC unit or connected thereto in place of bubble memory owing to the different input/output interface.

An object of the present invention is to provide a file control method whereby a disc unit can be connected to an NC unit not designed for connection to a disc unit, namely an NC unit which cannot output a command to the disc unit on the basis of a normal input/output interface between itself and the disc unit, this being made possible without modifying the NC unit, and whereby an NC program and other data (files) can be stored in the disc unit and, moreover, a prescribed NC program or data (file) can read out of the disc unit.

Another object of the present invention is to provide a file control method whereby files are stored in a disc unit and a prescribed file is read out of the disc unit on the basis of a bubble memory input/output interface.

A further object of the present invention is to provide a file control method whereby two or more NC units not designed for connection to a disc unit can share a single disc unit.

Disclosure of the Invention

The present invention provides a file control method of a system including an NC unit for storing data indicative of a division between files in a memory together with the files and reading a prescribed file out of the memory by inputting a stored file ranking indicating at which location of the memory the file is stored, the method including connecting a disc unit to the NC unit, affixing a common name to all files outputted from the NC unit, storing beforehand at a prescribed area of the disc unit a correlation between the names and the starting locations of areas storing the files outputted from the NC unit, and when storing files, retrieving storage areas by using the names and storing the files outputted from the NC unit, together with data indicating the divisions between files, in numerical order in the storage areas, and when a stored file ranking n is inputted from the NC unit, retrieving storage areas by using the names, counting the divisions in order starting from the beginning of the storage areas to retrieve the n-th file, and inputting the n-th file into the NC unit. According to the present invention, files can be stored in the disc unit and a prescribed file can be read out of the disc unit in accordance with, e.g, a bubble memory input/output interface, without relying upon a normal input/output interface with the disc unit. This enables the disc unit to be connected to an NC unit not designed for connection to a disc unit.

Brief Description of the Drawings

Fig. 1 is a block diagram showing a system to which the file control method of the present invention is applied, Fig. 2 is a flowchart of file writing processing according to the present invention, Fig. 3 is a view for describing file reading processing according to the present invention, Fig. 4 is a view showing the construction of a conventional system, and Fig. 5 is a view for describing the configuration of files stored in a bubble memory.

Best Mode for Carrying Out the Invention

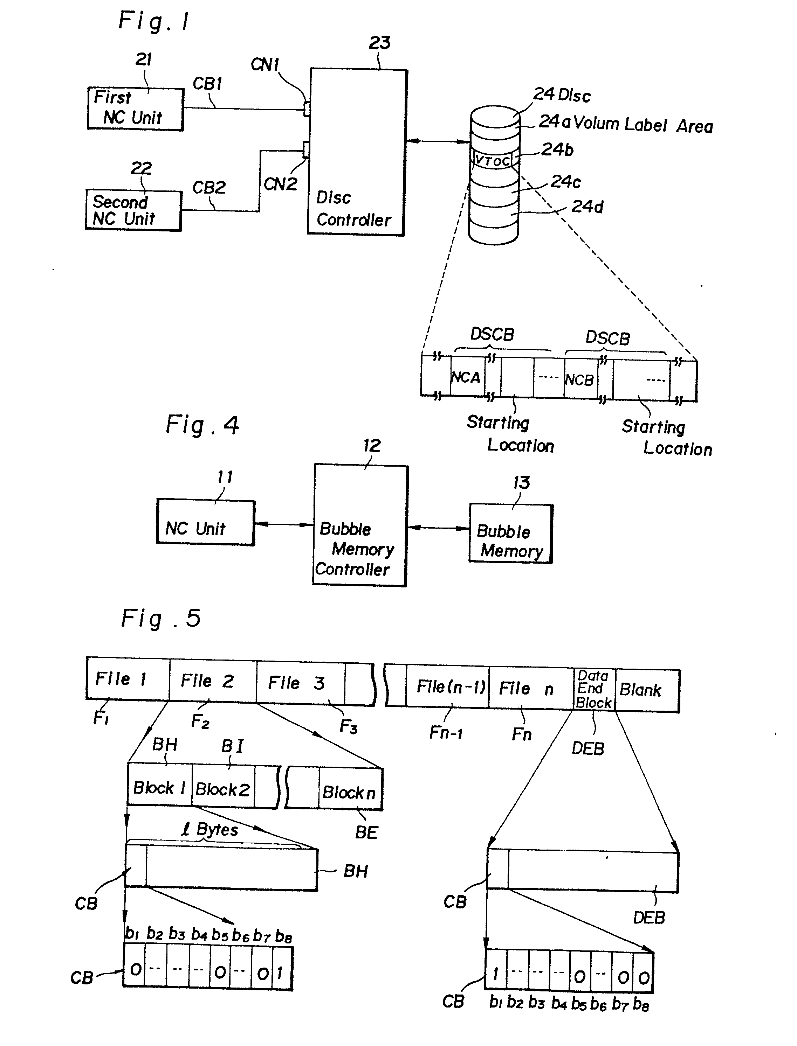

Fig. 1 is a system block diagram for describing the file control method of the present invention. Numeral 21 denotes a first NC unit, 22 a second NC unit, 23 a disc controller, and 24 a disc. The NC units 21, 22 are connected to the disc controller 23 via cables CB1, CB2 and connectors CN1, CN2, respectively. It is assumed that each NC unit is adapted so as to be capable of a data transfer with an external memory solely on the basis of an input/output interface with a bubble memory.

A prescribed area of the disc 24 has a volume label area 24a and an area 24b referred to as a VTOC (volume table of contents). A data set control block (DSCB) is generated in the VTOC 24b for each file (data set) stored in the disc 24. Each data set control block DSCB stores the file name (data set name), the starting and end positions of the storage area at which the file is stored, the length of the data in the file, etc. A common file name such as NCA is affixed to all files from the NC unit 21, and one data set control block DSCB is generated in advance for this file name. Further, a common file name such as NCB is affixed to all files from the NC unit 22, and one data set control block DSCB is generated in advance for this file name. The data set control block DSCB of the NC unit 21 stores at least the file name NCA, the starting position of an area 24c in which a file from the NC unit 21 is to be stored, and extension information. Likewise, the data set control block DSCB of the NC unit 22 stores at least the file name NCB, the starting position of an area 24d in which a file from the NC unit 22 is to be stored, and extension information.

The volume label area 24a stores a volume label such as a flag, a volume label number and a pointer to the VTOC.

If a request to store a file (NC program) is received from an apparatus (e.g., an apparatus for automatically creating an NC program), not shown, on the basis of the input/output interface with the disc 24, the disc controller 23 locates the position of the VTOC from the VTOC pointer of the volume label, identifies a vacant area from the contents of the data set control block DSCB (not shown) indicating a vacant area generated in the VTOC, stores the file in this area and generates the data set control block DSCB, which comprises the stored file name, storage location and data length, etc., in the VTOC 24b. If a request to read a prescribed file is received from the automatic NC program creating apparatus on the basis of the input/output interface with the disc, the disc controller 23 likewise locates the position of the VTOC from the VTOC pointer of the volume label and successively reads the file names of respective data set control blocks DSCB generated in the VTOC, thus retrieving the data set control block DSCB having the commanded file name. When the data set control block DSCB having the commanded file name has been retrieved, data are successively read from the storage location specified by the file storage location data in this data set control block and these data are outputted to the automatic NC program creating apparatus.

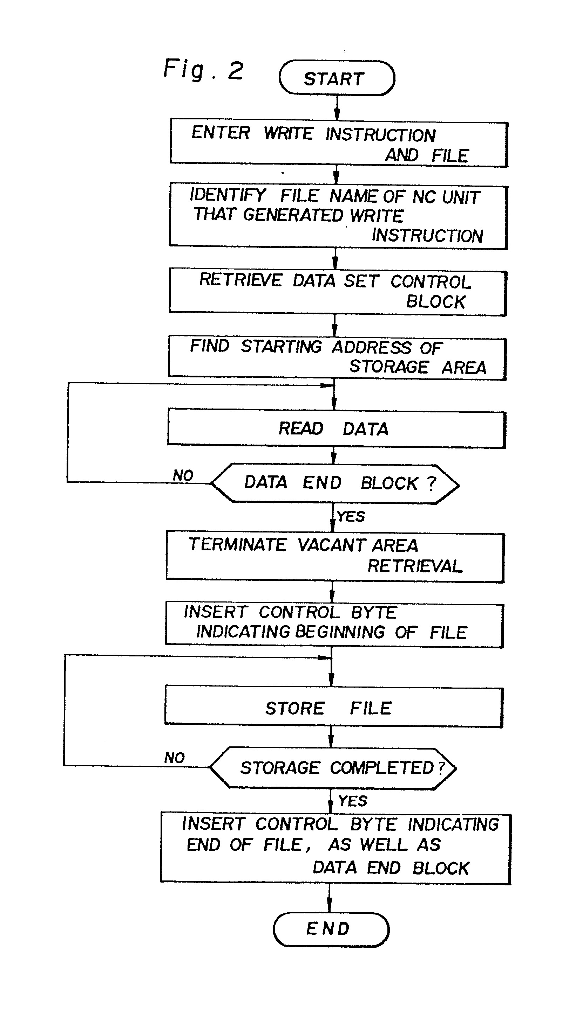

If a write instruction and NC program data or other data (file) enter from an NC unit, the disc controller 23 performs file writing processing in accordance with Fig. 2. Specifically, the disc controller 23 first determines which of the NC units has issued the write instruction.

If the write instruction is from the NC unit 21, the disc controller 23 treats the received file name as being NCA. If the write instruction is from the NC unit 22, the disc controller recognizes the received file name as being NCB. (It will be assumed hereafter that the write instruction is from the NC unit 21.) The correlation between the NC units and file names is assumed to be preset.

Next, the disc controller 23 refers to the VTOC pointer of the volume laber to retrieve the DSCB having the file name NCA from the VTOC. When the DSCB having the file name NCA is retrieved, the disc controller reads from the DSCB the location at which the storage area of the file NCA begins.

Thereafter, data are successively read from the beginning of the storage area and a control byte indicative of data end is retrieved to locate a blank area.

The disc controller 23 then inserts a control byte indicating the beginning of a file at the head of the file, successively stores the data from the storage location of the control byte indicative of data end (which control byte is erased in the process), inserts a control byte indicative of the end of a file, as well as a control byte indicative of the end of data, at the end of the file, stores the foregoing and then terminates the processing for the storage of the file in the disc 24.

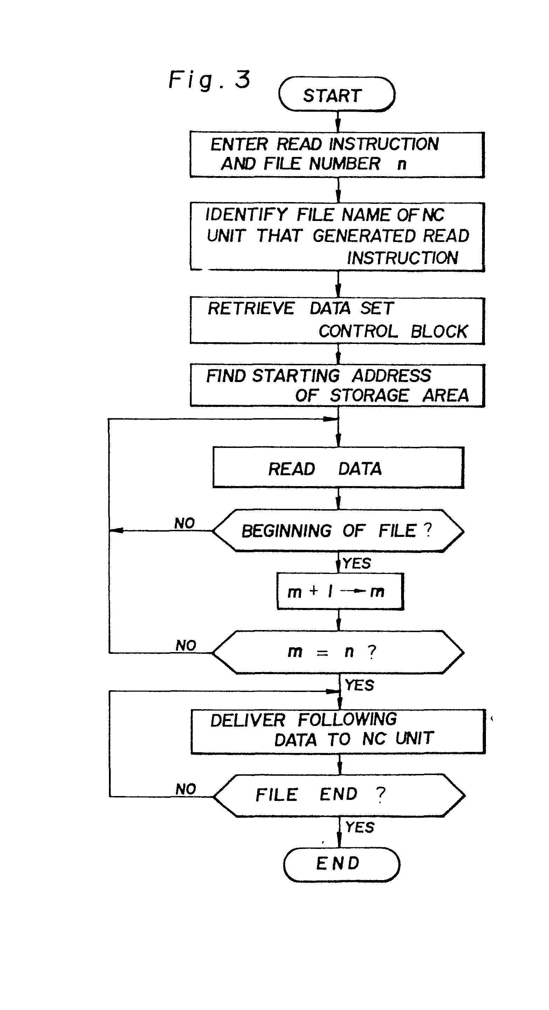

The foregoing sets forth the processing for writing in a file. If a file read instruction and a file number n enter from the NC unit, then the disc controller 23 performs processing in accordance with Fig. 3. Specifically, the disc controller 23 determines from which of the NC units the read instruction is received.

If the read request is from the NC unit 21, the disc controller recognizes the file name as being NCA. If the read request is from the NC unit 22, the disc controller recognizes the received file name as being NCB. (It will be assumed hereafter that the read request is from the NC unit 21.)

The disc controller 23 refers to the VTOC pointer of the volume laber to retrieve the data set control block DSCB having the file name NCA from the VTOC.

When the data set control block DSCB having the file name NCA is retrieved, the disc controller reads from the data set control block DSCB the location at which the storage area of the file NCA begins, successively reads the stored data from this starting location and counts up (m+1 $\longrightarrow$ m) each time a control byte indicative of the beginning of a file is detected. When the value of the count reaches n, the stored data from this point onward are outputted to the NC unit 21 until a control byte indicating the end of the file is

-11-  0181407

detected.

Thereafter, and in similar fashion, control is exercised to store files in the disc 24 and to read files out of the disc. Control is performed in exactly the same manner from write and read requests from the NC unit 22. Further, though the foregoing description deals with two NC units connected to a disc unit, it is obvious that the present invention can be applied to cases where one or three or more NC units is connected to the disc unit.

According to the present invention as described above, the arrangement is such that when a disc is connected to an NC unit which has not been designed for such a connection, namely to an NC unit incapable of requesting writing or reading on the basis of a normal input/output interface with the disc, NC programs and other data can still be stored in the disc from the NC unit or a prescribed NC program and other data can be read out of the disc by the NC unit. This makes it possible to newly connect a disc to an NC unit having, e.g., a bubble memory connected thereto, or to connect a disc unit to the NC unit in place of the bubble memory.

CLAIMS:

1. A file control method of a system including an NC unit for storing data indicative of a division between files in a memory together with said files and reading a prescribed file out of said memory by inputting a stored file ranking indicating at which location of said memory the file is stored, characterized by connecting a disc unit to said NC unit, storing beforehand at a prescribed area of said disc unit the starting locations of areas storing the files outputted from said NC unit, and when storing files, storing the files outputted from the NC unit, together with data indicating the divisions between files, in numerical order in said storage areas, and when a stored file ranking n is inputted from the NC unit, counting said divisions in order starting from the beginning of the storage areas to retrieve an n-th file, and inputting the n-th file into the NC unit.

2. A file control method according to claim 1, characterized by connecting at least two NC units to the disc unit, predetermining file storage areas for each NC unit, storing beforehand at a prescribed storage area of the disc unit a correlation between starting locations of each file storage area and each NC unit, and writing a file into a file storage area and reading a file out of a file storage area, said storage area corresponding to whichever of the NC units issues a file input/output request.

3.    A file control method according to claim 2, characterized by storing a correlation between the NC units and file names beforehand, and storing a file name as well as data indicative the starting location of said file area in said prescribed area.

4.    A file control method of a system including an NC unit for storing data indicative of a division between files in a memory together with said files and reading a prescribed file out of said memory by inputting a stored file ranking indicating at which location of said memory the file is stored, characterized by connecting a disc unit to said NC unit, affixing a common name to all files outputted from the NC unit, storing beforehand at a prescribed area of said disc unit a correlation between said names and areas storing the files outputted from the NC unit, and when storing files, retrieving storage areas by using said names and storing the files outputted from the NC unit, together with data indicating the divisions between files, in numerical order in said storage areas, and when a stored file ranking n is inputted from the NC unit, retrieving storage areas by using said names, counting said divisions in order starting from the beginning of said storage areas to retrieve an n-th file, and inputting said n-th file into the NC unit.

0181407

1/3

Fig. 1

Fig. 4

Fig. 5

*Fig. 2*

```
        ( START )
            │
            ▼
┌──────────────────────────────┐
│ ENTER  WRITE  INSTRUCTION     │
│                  AND  FILE     │
└──────────────────────────────┘
            │
            ▼
┌──────────────────────────────┐
│ IDENTIFY  FILE  NAME OF NC UNIT│
│ THAT GENERATED WRITE           │
│                  INSTRUCTION   │
└──────────────────────────────┘
            │
            ▼
┌──────────────────────────────┐
│ RETRIEVE DATA SET  CONTROL     │
│                   BLOCK        │
└──────────────────────────────┘
            │
            ▼
┌──────────────────────────────┐
│ FIND  STARTING ADDRESS OF      │
│                STORAGE  AREA   │
└──────────────────────────────┘
            │◄──────────────┐
            ▼               │
┌──────────────────────────┐│
│       READ   DATA         ││
└──────────────────────────┘│
            │               │
            ▼               │
     NO ◄ DATA END  BLOCK ? ┘
            │ YES
            ▼
┌──────────────────────────────┐
│ TERMINATE  VACANT AREA         │
│                   RETRIEVAL    │
└──────────────────────────────┘
            │
            ▼
┌──────────────────────────────┐
│ INSERT CONTROL BYTE            │
│ INDICATING BEGINNING  OF  FILE │
└──────────────────────────────┘
            │◄──────────────┐
            ▼               │
┌──────────────────────────┐│
│       STORE    FILE       ││
└──────────────────────────┘│
            │               │
            ▼               │
   NO ◄ STORAGE COMPLETED ? ┘
            │ YES
            ▼
┌──────────────────────────────┐
│ INSERT CONTROL  BYTE INDICATING│
│ END OF FILE,  AS WELL AS       │
│                DATA END  BLOCK │
└──────────────────────────────┘
            │
            ▼
        (  END  )
```

*Fig. 3*

```
                    ┌─────────┐
                    │  START  │
                    └─────────┘
                         │
            ┌────────────────────────────┐
            │ ENTER READ INSTRUCTION      │
            │ AND FILE NUMBER  n          │
            └────────────────────────────┘
                         │
            ┌────────────────────────────┐
            │ IDENTIFY FILE NAME OF NC    │
            │ UNIT THAT GENERATED READ    │
            │              INSTRUCTION    │
            └────────────────────────────┘
                         │
            ┌────────────────────────────┐
            │ RETRIEVE  DATA SET          │
            │            CONTROL BLOCK    │
            └────────────────────────────┘
                         │
            ┌────────────────────────────┐
            │ FIND STARTING  ADDRESS      │
            │         OF STORAGE AREA     │
            └────────────────────────────┘
                         │
            ┌────────────────────────────┐
            │        READ    DATA         │
            └────────────────────────────┘
                         │
        NO   ⟨ BEGINNING OF  FILE ? ⟩
                         │ YES
                   ┌───────────┐
                   │ m + 1 → m │
                   └───────────┘
                         │
        NO   ⟨      m  =  n ?      ⟩
                         │ YES
            ┌────────────────────────────┐
            │ DELIVER FOLLOWING           │
            │        DATA TO NC UNIT      │
            └────────────────────────────┘
                         │
        NO   ⟨    FILE   END  ?    ⟩
                         │ YES
                    ┌─────────┐
                    │  END    │
                    └─────────┘
```

# INTERNATIONAL SEARCH REPORT

0181407

International Application No. PCT/JP85/00257

## I. CLASSIFICATION OF SUBJECT MATTER (if several classification symbols apply, indicate all) 3

According to International Patent Classification (IPC) or to both National Classification and IPC

Int. Cl$^4$ G05B 19/18

## II. FIELDS SEARCHED

### Minimum Documentation Searched 4

| Classification System | Classification Symbols |
|---|---|
| IPC | G05B 19/18 – 19/42 |

### Documentation Searched other than Minimum Documentation to the Extent that such Documents are Included in the Fields Searched 5

| | |
|---|---|
| Jitsuyo Shinan Koho | 1926 – 1985 |
| Kokai Jitsuyo Shinan Koho | 1971 – 1985 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| A | JP, A, 54-20708 (Sharp Corporation) 16 February 1979 (16. 02. 79), Column 2, line 17 to column 3, line 5 (Family : none) | 1 – 4 |
| A | JP, A, 58-163007 (Fujitsu Fanuc Limited) 27 September 1983 (27. 09. 83), Column 3, line 16 to column 4, line 7 & EP, A2, 90525 & EP, A3, 90525 | 1 – 4 |
| A | JP, A, 56-14309 (Fujitsu Fanuc Limited) 12 February 1981 (12. 02. 81), Column 2, line 14 to column 3, line 4 (Family : none) | 1 – 4 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| July 30, 1985 (30. 07. 85) | August 12, 1985 (12. 08. 85) |
| International Searching Authority 1 | Signature of Authorized Officer 20 |
| Japanese Patent Office | |

Form PCT/ISA/210 (second sheet) (October 1981)